# EUROPEAN PATENT SPECIFICATION

(11) **EP 0 902 070 B1**
(45) Date of publication and mention of the grant of the patent: **18.02.2004**
(21) Application number: 98306979.0
(22) Date of filing: 01.09.1998
(51) Int. Cl.: C09G 1/00

(54) **Improvements relating to furniture polish**
Verbesserte Möbelpolitur
Encaustique améliorée pour meubles

(30) Priority: 12.09.1997 GB 9719324; 16.09.1997 GB 9719556
(43) Date of publication of application: 17.03.1999
(73) Proprietor: Roe, Keith A., Norwich, Norfolk NR13 5BB (GB)
(72) Inventor: Roe, Keith A., Norwich, Norfolk NR13 5BB (GB)
(74) Representative: Nash, Keith Wilfrid

(56) References cited:
- EP-A- 0 365 160
- EP-A- 0 450 656
- DE-A- 19 545 242
- GB-A- 1 367 622

## Description

This invention relates to a furniture polish.

According to one aspect of the invention, there is provided a furniture polish incorporating fragrance, wherein the fragrance is at least in part micro-encapsulated in a multitude of naturally self-adhesive micro-capsules of varying wall thickness.

The micro-capsules are preferably produced by the known coacervation, three phase method.

Preferably, the entire fragrance in the polish is held in the micro-capsules, and preferably at least a proportion of the one or more active polishing ingredients of the polish are also micro-encapsulated, conveniently in the same micro-capsules as the fragrance.

The polish is preferably accommodated in an aerosol, trigger spray or pump spray format.

According to another aspect of the invention, there is provided a furniture polish incorporating fragrance, wherein at least a proportion of the fragrance and at least a proportion of the one or more active polishing ingredients are micro-encapsulated in a multitude of naturally self-adhesive micro-capsules of such varying wall thicknesses that, on first application of the polish with a duster, only some of the micro-capsules are fractured and the rest become attached to the fibres of the duster, whereby on a subsequent further use of the duster without application of further polish, at least some of the micro-capsules attached to the duster are caused to fracture to release further fragrance and active polishing ingredient.

When in this further aspect of the invention the polish is applied as a spray, thinner walled capsules will fracture to release fragrance and polishing ingredient due to passage through the spray nozzle.

The invention is further described with reference to the following example.

Micro-capsules containing a polish fragrance and at least a proportion of the active polishing ingredients of the polish system are formed by the known coacervation, three phase method. This method of production is controlled so that the micro-capsules have an average diameter in the range 3 to 30 microns, preferably 4 to 16 microns and more preferably about 5 microns, and are of varying wall thicknesses.

The micro-capsules are incorporated into the polish base, which may already include a proportion of the active polishing ingredients, to form a generally uniform suspension therein. The polish system is then filled into a spray container.

When the polish is used, only some of the micro-capsules fracture on passage through the spray nozzle, to enable polishing with a duster accompanied by release of fragrance. Thicker walled capsules become entrapped on the fibre duster where they will harden and tend to become brittle over time, so that when the duster is next used, without further application of polish, further fragrance and active polishing ingredient are released due to friction generated by the polishing action with the duster.

## Claims

1. A furniture polish incorporating fragrance, wherein the fragrance is at least in part micro-encapsulated in a multitude of naturally self-adhesive micro-capsules of varying wall thickness.

2. A polish according to claim 1, wherein the micro-capsules are produced by a coacervation, three phase method.

3. A polish according to claim 1, wherein the entire fragrance is held in the micro-capsules.

4. A polish according to claim 1, wherein a proportion of at least one active polishing ingredient is also micro-encapsulated.

5. A polish according to claim 4, wherein the at least one polishing ingredient is held in the same micro-capsules as the fragrance.

6. A polish according to claim 1, accommodated in an aerosol, trigger spray or pump spray format.

7. A furniture polish incorporating fragrance, wherein at least a proportion of the fragrance and at least a proportion of the one or more active polishing ingredients are micro-encapsulated in a multitude of naturally self-adhesive micro-capsules of such varying wall thicknesses that, on first application of the polish with a duster, only some of the micro-capsules are fractured and the rest become attached to the fibres of the duster, whereby on a subsequent further use of the duster without application of further polish, at least some of the micro-capsules attached to the duster are caused to fracture to release further fragrance and active polishing ingredient.

8. A polish according to claim 7, wherein the micro-capsules are produced by a coacervation, three phase method.

9. A polish according to claim 7, wherein the entire fragrance is held in the micro-capsules.

10. A polish according to claim 7, incorporated in a spray format whereby, when applied as a spray, thinner walled capsules will fracture to release fragrance and polishing ingredient due to passage through the spray nozzle.

## Patentansprüche

1. Eine Duftstoffe enthaltende Möbelpolitur, wobei die Duftstoffe mindestens teilweise in einer großen Zahl von auf natürliche Weise selbst klebenden Mikrokapseln verschiedener Wandstärke mikroeingekapselt sind.

2. Eine Politur nach Anspruch 1, wobei die Mikrokapseln durch ein dreistufiges Flockenbildungsverfahren hergestellt sind.

3. Eine Politur nach Anspruch 1, wobei sämtliche Duftstoffe in den Mikrokapseln gehalten sind.

4. Eine Politur nach Anspruch 1, wobei ein Teil mindestens eines aktiven Politurbestandteils auch mikroeingekapselt ist.

5. Eine Politur nach Anspruch 4, wobei der mindestens eine Politurbestandteil in den gleichen Mikrokapseln wie die Duftstoffe gehalten ist.

6. Eine Politur nach Anspruch 1, aufgenommen in einem Aerosol, Auslöse-(Trigger-) oder Pumpensprühnebel.

7. Eine Duftstoffe enthaltende Möbelpolitur, bei der mindestens ein Teil der Duftstoffe und mindestens ein Teil eines oder mehrerer aktiver Politurbestandteile in einer großen Zahl von auf natürliche Weise selbst klebenden Mikrokapseln solcher verschiedener Wandstärke mikroeingekapselt sind, daß bei erster Anwendung der Politur mit einem Lappen nur einige der Mikrokapseln aufbrechen und der Rest an den Fasern des Lappens anhaftet, wobei bei einer anschließenden Verwendung des Lappens ohne weiteres Aufbringen der Politur mindestens einige der an dem Lappen haftenden Mikrokapseln zur Freigabe weiterer Duftstoffe und aktiver Politurbestandteile aufbrechen.

8. Eine Politur nach Anspruch 7, wobei die Mikrokapseln durch ein dreistufiges Flockenbildungsverfahren, hergestellt sind.

9. Eine Politur nach Anspruch 7, wobei sämtliche Duftstoffe in den Mikrokapseln gehalten sind.

10. Eine Politur nach Anspruch 7, eingeschlossen in einem Sprühnebel, wobei bei Anwendung als Sprühnebel dünnerwandige Kapseln zum Freigeben der Duftstoffe und Politurbestandteile aufgrund des Durchgangs durch die Sprühdüse aufbrechen.

## Revendications

1. Encaustique pour mobilier comprenant du parfum, dans lequel le parfum est au moins partiellement microencapsulé dans une multitude de microcapsules naturellement autoadhésives ayant des épaisseurs de paroi diverses.

2. Encaustique selon la revendication 1, dans lequel les microcapsules sont produites par une méthode à trois phases de coacervation.

3. Encaustique selon la revendication 1, dans lequel l'ensemble du parfum est contenu dans les microcapsules.

4. Encaustique selon la revendication 1, dans lequel une partie d'au moins un ingrédient encaustique actif est également microencapsulée.

5. Encaustique selon la revendication 4, dans lequel l'ingrédient encaustique, au moins un, est contenu dans les mêmes microcapsules que le parfum.

6. Encaustique selon la revendication 1, logé dans un format d'aérosol, de pulvérisateur à déclencheur ou de pulvérisateur à pompe.

7. Encaustique pour mobilier comprenant du parfum, dans lequel au moins une partie du parfum et au moins une partie d'un ou plusieurs ingrédients encaustiques actifs sont microencapsulées dans une multitude de microcapsules naturellement autoadhésives ayant des épaisseurs de paroi diverses de sorte que, lors de la première application de l'encaustique à l'aide d'un chiffon à poussière, uniquement quelques-unes des microcapsules se rompent et que le reste se fixe sur les fibres du chiffon à poussière, ce par quoi, lors d'une utilisation ultérieure du chiffon à poussière sans autre application d'encaustique, au moins quelques-unes des microcapsules fixées sur le chiffon à poussière sont amenées à se rompre pour libérer encore du parfum et de l'ingrédient encaustique actif.

8. Encaustique selon la revendication 7, dans lequel les microcapsules sont produites par une méthode à trois phases de coacervation.

9. Encaustique selon la revendication 7, dans lequel l'ensemble du parfum est contenu dans les microcapsules.

10. Encaustique selon la revendication 7, logé dans un format de pulvérisateur, ce par quoi, lorsqu'il est appliqué sous la forme d'une pulvérisation, les capsules ayant des parois plus minces se rompent pour libérer du parfum et de l'ingrédient encaustique lors du passage par la buse de du pulvérisateur.
